# FASCICULE DE BREVET EUROPEEN

(11) **EP 1 778 962 B1**
(45) Date de publication et mention de la délivrance du brevet: **19.09.2012**
(21) Numéro de dépôt: 05778251.8
(22) Date de dépôt: 22.06.2005
(51) Int. Cl.: F02D 41/02, F02D 41/14, F02D 41/40

(54) **SYSTÈME DE CONTRÔLE DE LA RÉGÉNÉRATION DE MOYENS DE DÉPOLLUTION**
SYSTEM ZUR STEUERUNG DER REGENIERUNG VON ENTGIFTUNGSMITTELN
SYSTEM FOR CONTROLLING DEPOLLLUTION MEANS REGENERATION

(30) Priorité: 23.06.2004 FR 0406867
(43) Date de publication de la demande: 02.05.2007
(73) Titulaire: PEUGEOT CITROËN AUTOMOBILES S.A., 78140 Vélizy Villacoublay (FR)
(72) Inventeur: COLIGNON, Christophe, F-92300 LEVALLOIS PERRET (FR)
(74) Mandataire: Pinchon, Odile
(86) Numéro de dépôt international: PCT/FR2005/050479
(87) Numéro de publication internationale: WO 2006/005877

(56) Documents cités:
- EP-A- 1 041 262
- EP-B- 0 708 809
- FR-A- 2 774 421
- FR-A- 2 802 572
- BUNTING A: "SPRINGING THE TRAP" mai 2000 (2000-05), AUTOMOTIVE ENGINEER, MECHANICAL ENGINEERING PUBL.LTD. BURY ST.EDMUNDS, GB, PAGE(S) 73-74 , XP000936087 ISSN: 0307-6490 le document en entier

## Description

La présente invention concerne un système de contrôle de la régénération de moyens de dépollution intégrés dans une ligne d'échappement d'un moteur de véhicule automobile.

Plus particulièrement, l'invention se rapporte à un tel système dans lequel le moteur est associé à des moyens à rampe commune d'alimentation en carburant de cylindres de celui-ci, selon au moins une post-injection.

Une telle post-injection est, de façon classique, une injection de carburant après le point mort haut du cylindre considéré.

Ces moyens d'alimentation sont adaptés pour mettre en oeuvre, à iso-couple, par modification des paramètres de contrôle de fonctionnement du moteur, différentes stratégies de régénération permettant d'obtenir des niveaux thermiques différents dans la ligne d'échappement.

Ainsi par exemple, des moyens d'alimentation mettant en oeuvre des stratégies de régénération dites normale, de niveau 1, de niveau 2 et/ ou de niveau 2 surcalibré, ont déjà été proposés.

On sait en effet que pour assurer la régénération des moyens de dépollution, tels qu'un filtre à particules, les suies piégées dans celui-ci sont brûlées grâce à la thermique fournie par le moteur et à l'exotherme réalisé par la conversion des HC ou du CO sur des moyens formant catalyseur d'oxydation, placés par exemple en amont du filtre à particules.

Cette combustion peut être assistée par un élément catalyseur, mélangé aux suies, issu par exemple d'un additif d'aide à la régénération, mélangé au carburant d'alimentation du moteur ou bien par un catalyseur déposé directement sur les parois du filtre à particules (filtre à particules catalysé).

Plus les niveaux thermiques dans la ligne d'échappement en entrée du filtre à particules sont élevés, plus la durée de régénération du filtre est courte.

Cependant, l'utilisation de post-injections engendre une dilution de l'huile de lubrification du moteur par le carburant, ce qui dégrade les propriétés de lubrification de celle-ci et se traduit notamment par une baisse de la viscosité et peut conduire si cette viscosité est trop basse, à une casse du moteur.

Le but de l'invention est donc de résoudre ces problèmes.

On connait de la demande de brevet européen EP 1 041 262 des moteurs à allumage commandé opérés selon différents modes, dont un mode stratifié et un mode riche utilisé pour régénérer un piège à NOx captant les NOx produits lors des phases de combustion en mode stratifié. La durée d'opération en mode stratifiée est estimée à l'aide d'un compteur de temps, remis à zéro lors de la bascule d'un mode d'opération à l'autre.

On connait de plus du brevet FR 2774421, un système de gestion du fonctionnement d'un filtre à particules associé à un moteur diesel (M) basé sur des moyens de contrôle du niveau d'encrassement du filtre à particules et des moyens de contrôle du déclenchement et du déroulement de la régénération du filtre et des moyens de contrôle du fonctionnement et de l'intégrité du filtre

L'l'invention a pour objet un système de contrôle de la régénération de moyens de dépollution intégrés dans une ligne d'échappement d'un moteur de véhicule automobile, associés à des moyens à rampe commune d'alimentation en carburant, adaptés pour mettre en oeuvre des stratégies de régénération des moyens de dépollution, lesdites stratégies conduisant à différents niveaux thermiques, en utilisant des post-injections de carburant dans les cylindres du moteur, caractérisé en ce qu'il comporte en outre, pour chaque régénération, des moyens de calcul du cumul du temps passé dans les différentes stratégies de régénération, et des moyens de comparaison de ce temps cumulé à une valeur de seuil maximale, pour couper la régénération en cas de dépassement de cette valeur de seuil, ladite valeur de seuil correspondant à un risque de dépassement d'une valeur limite de dilution de l'huile de lubrification du moteur par le carburant, et en ce que les temps passés dans les différentes stratégies de régénération, sont affectés de coefficients différents

Suivant d'autres caractéristiques :
- les moyens de dépollution comprennent un filtre à particules ;
- le filtre à particules est catalysé ;
- les moyens de dépollution comprennent un piège à NOx ;
- le carburant comporte un additif destiné à se déposer avec les particules auxquelles il est mélangé, sur les moyens de dépollution pour faciliter leur régénération
- le carburant comporte un additif formant piège à NOx ; ;
- les moyens de dépollution sont imprégnés avec une formulation SCR assurant une fonction d'oxydation CO/HC ; et
- le moteur est associé à un turbocompresseur.

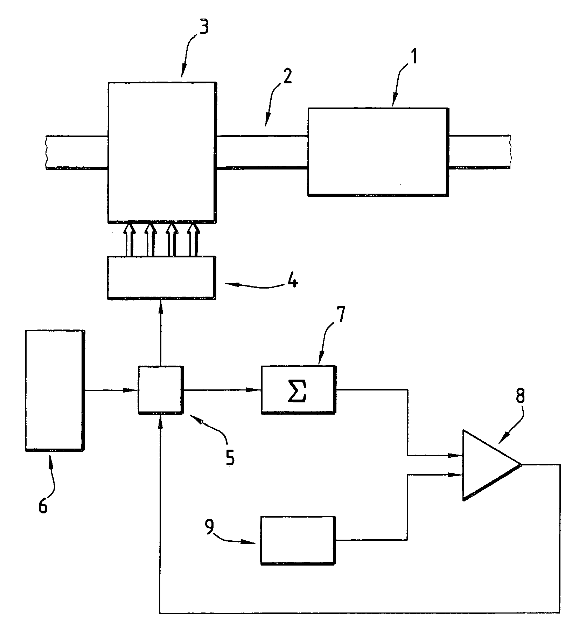

L'invention sera mieux comprise à la lecture de la description qui va suivre, donnée uniquement à titre d'exemple et faite en se référant au dessin annexé qui représente un schéma synoptique illustrant la structure générale et le fonctionnement d'un système de contrôle selon l'invention.

On a en effet illustré sur cette figure, un système de contrôle de la régénération de moyens de dépollution désignés par la référence générale 1, intégrés dans une ligne d'échappement 2 d'un moteur 3 de véhicule automobile.

Le moteur peut par exemple être un moteur Diesel de véhicule automobile, les moyens de dépollution comprenant par exemple un filtre à particules ou autres, associé à des moyens formant catalyseur d'oxydation ou autres, comme cela est déjà connu dans l'état de la technique.

Ce moteur est associé à des moyens à rampe commune d'alimentation en carburant, désignés par la référence générale 4 sur cette figure, adaptés pour mettre en oeuvre sous le contrôle par exemple d'un calculateur désigné par la référence générale 5, des stratégies de régénération des moyens de dépollution, en utilisant des post-injections de carburant dans les cylindres du moteur.

Ces différentes stratégies sont par exemple stockées dans des moyens de mémorisation désignés par la référence générale 6 et associés au calculateur 5.

Selon l'invention, ce système comporte également, pour chaque régénération des moyens de dépollution, des moyens de calcul du cumul du temps passé dans les différentes stratégies de régénération, désignés par la référence générale 7 sur cette figure, et des moyens de comparaison 8 de ce temps cumulé, à une valeur de seuil maximale établie par exemple par des moyens correspondants 9, pour couper la régénération en cas de dépassement de cette valeur de seuil.

Les moyens de calcul du cumul 7 sont également, par exemple, adaptés pour affecter des coefficients différents aux temps passés lors de la régénération, dans les différentes stratégies.

Ainsi, les coefficients affectés aux temps passés en stratégies de régénération normale, de niveau 1, de niveau 2 et/ou de niveau 2 surcalibré, peuvent être différents pour tenir compte de la dilution plus ou moins importante d'huile lors de l'application de ces différentes stratégies.

On peut également utiliser différents coefficients suivant l'état du moteur (par exemple pied levé, ralenti ou moteur chargé), ce qui multiplie le nombre de coefficients par niveau.

Un tel système permet alors de maintenir dans des limites admissibles, le niveau de dilution de l'huile, en contrôlant celui-ci par l'utilisation d'un compteur de temps de post-injection efficace et en coupant celle-ci lorsque la valeur de seuil est atteinte, afin d'éviter toute dilution supplémentaire, permettre au carburant de s'évaporer et éviter de casser le moteur.

Bien entendu, d'autres modes de réalisation peuvent être envisagés et en particulier, différents modes de réalisation des moyens de dépollution peuvent être prévus.

Ainsi par exemple, les moyens de dépollution et les moyens formant catalyseur d'oxydation peuvent être intégrés dans un seul et même élément, notamment sur un même substrat.

A titre d'exemple, un filtre à particules intégrant la fonction d'oxydation peut être envisagé.

De même, un piège à NOx intégrant une telle fonction d'oxydation peut également être envisagé, que celui-ci soit additivé ou non.

Cette fonction d'oxydation et/ou de piège à NOx peut être remplie par exemple par un additif mélangé au carburant.

Dans ce cas, le carburant peut en effet comporter un additif destiné à se déposer avec les particules auxquelles il est mélangé, sur les moyens de dépollution pour faciliter leur régénération.

De même, le moteur peut être associé ou non à un turbocompresseur.

## Revendications

1. Système de contrôle de la régénération de moyens de dépollution (1) intégrés dans une ligne d'échappement (2) d'un moteur (3) de véhicule automobile, associés à des moyens (4, 5) à rampe commune d'alimentation en carburant, adaptés pour mettre en oeuvre des stratégies (6) de régénération des moyens de dépollution, lesdites stratégies conduisant à différents niveaux thermiques, en utilisant des post-injections de carburant dans les cylindres du moteur, **caractérisé en ce qu'**il comporte en outre, pour chaque régénération, des moyens (7) de calcul du cumul du temps passé dans les différentes stratégies de régénération, et des moyens de comparaison (8) de ce temps cumulé à une valeur de seuil maximale (9), pour couper la régénération en cas de dépassement de cette valeur de seuil, ladite valeur de seuil correspondant à un risque de dépassement d'une valeur limite de dilution de l'huile de lubrification du moteur par le carburant, et **en ce que** les temps passés dans les différentes stratégies de régénération, sont affectés de coefficients différents.

2. Système selon la revendication 1, caractérisé en ce l'on utilise de plus différents coefficients selon l'état du moteur, ce qui multiplie le nombre de coefficient par niveau.

3. Système selon l'une quelconque des revendications précédentes, **caractérisé en ce que** les moyens de dépollution (1) comprennent un filtre à particules.

4. Système selon la revendication 3, **caractérisé en ce que** le filtre à particules est catalysé.

5. Système selon l'une quelconque des revendications précédentes, **caractérisé en ce que** les moyens de dépollution comprennent un piège à NOx.

6. Système selon l'une quelconque des revendications précédentes, **caractérisé en ce que** le carburant comporte un additif destiné à se déposer avec les particules auxquelles il est mélangé, sur les moyens de dépollution (1) pour faciliter leur régénération.

7. Système selon l'une quelconque des revendications 1 à 5, **caractérisé en ce que** le carburant comporte un additif formant piège à NOx.

8. Système selon l'une quelconque des revendications précédentes, **caractérisé en ce que** les moyens de dépollution (1) sont imprégnés avec une formulation SCR assurant une fonction d'oxydation CO/HC.

9. Système selon l'une quelconque des revendications précédentes, **caractérisé en ce que** le moteur est associé à un turbocompresseur.

## Claims

1. A system for controlling the regeneration of depollution means (1) which are integrated into an exhaust line (2) of a motor vehicle engine (3), associated with common rail means (4, 5) for the supply of fuel, adapted to implement regeneration strategies (6) of the depollution means, the said strategies leading to different thermal levels, using post-injections of fuel in the cylinders of the engine, **characterized in that** it further comprises, for each regeneration, means (7) for calculating the cumulation of time passed in the different regeneration strategies, and means (8) for comparison of this cumulated time with a maximum threshold value (9), to cut the regeneration in the case of an exceeding of this threshold value, the said threshold value corresponding to a risk of exceeding a limit dilution value of the lubricating oil of the engine by the fuel, and **in that** the time passed in the different regeneration strategies are given different coefficients.

2. The system according to Claim 1, **characterized in that** in addition different coefficients are used according to the status of the engine, which multiplies the number of coefficients per level.

3. The system according to any one of the preceding claims, **characterized in that** the depollution means (1) comprise a particle filter.

4. The system according to Claim 3, **characterized in that** the particle filter is catalyzed.

5. The system according to any one of the preceding claims, **characterized in that** the depollution means comprise a NOx trap.

6. The system according to any one of the preceding claims, **characterized in that** the fuel comprises an additive intended to be deposited, with the particles with which it is mixed, on the depollution means (1) to facilitate their regeneration.

7. The system according to any one of Claims 1 to 5, **characterized in that** the fuel comprises an additive forming a NOx trap.

8. The system according to any one of the preceding claims, **characterized in that** the depollution means (1) are impregnated with an SCR formulation ensuring a CO/HC oxidation function.

9. The system according to any one of the preceding claims, **characterized in that** the engine is associated with a turbo-compressor.

## Patentansprüche

1. System zur Steuerung der Regenerierung von Entgiftungsmitteln (1), die in eine Auspuffanlage (2) eines Motors (3) eines Kraftfahrzeugs eingebaut sind, die mit Mitteln (4, 5) mit Common-Rail-Kraftstoffeinspritzung verbunden sind, die geeignet sind, um Strategien (6) zur Regenerierung der Entgiftungsmittel umzusetzen, wobei die Strategien zu unterschiedlichen Wärmeniveaus führen, indem Nacheinspritzungen von Kraftstoff in die Zylinder des Motors verwendet werden, **dadurch gekennzeichnet, dass** es ferner für jedes Regenerierung Mittel (7) zum Berechnen der Summierung der Zeit, die in den unterschiedlichen Regenerierungsstrategien verbracht wurde, aufweist, und Mittel zum Vergleichen (8) dieser summierten Zeit mit einem maximalen Schwellenwert (9), um die Regenerierung in dem Fall eines Überschreitens dieses Schwellenwerts zu unterbrechen, wobei der Schwellenwert einer Überschreitungsgefahr eines Verdünnungsgrenzwerts des Schmieröls des Motors durch den Kraftstoff entspricht, und dass den verschiedenen in Regenerierungsstrategien verbrachten Zeiten unterschiedliche Koeffizienten zugewiesen sind.

2. System nach Anspruch 1, **dadurch gekennzeichnet, dass** man ferner unterschiedliche Koeffizienten in Abhängigkeit von dem Zustand des Motors verwendet, was die Anzahl von Koeffizienten pro Niveau vervielfacht.

3. System nach einem der vorhergehenden Ansprüche, **dadurch gekennzeichnet, dass** die Regenerierungsmittel (1) ein Partikelfilter aufweisen.

4. System nach Anspruch 3, **dadurch gekennzeichnet, dass** das Partikelfilter katalysiert ist.

5. System nach einem der vorhergehenden Ansprüche, **dadurch gekennzeichnet, dass** die Regenerierungsmittel eine NOx-Falle aufweisen.

6. System nach einem der vorhergehenden Ansprüche, **dadurch gekennzeichnet, dass** der Kraftstoff einen Zusatzstoff enthält, der dazu bestimmt ist, sich mit den Partikeln, mit welchen er vermischt ist, auf den Regenerierungsmitteln (1) zum Erleichtern ihrer Regenerierung abzulagern.

7. System nach einem der Ansprüche 1 bis 5, **dadurch gekennzeichnet, dass** der Kraftstoff einen Zusatzstoff enthält, der eine NOx-Falle bildet.

8. System nach einem der vorhergehenden Ansprüche, **dadurch gekennzeichnet, dass** die Regenerierungsmittel (1) mit einer SCR-Rezeptur imprägniert sind, die eine CO/HC-Oxidationsfunktion sicherstellt.

9. System nach einem der vorhergehenden Ansprüche, **dadurch gekennzeichnet, dass** der Motor mit einem Turbolader verbunden ist.
